# EUROPÄISCHE PATENTANMELDUNG

(11) **EP 3 578 275 A1**
(43) Veröffentlichungstag der Anmeldung: **11.12.2019**
(21) Anmeldenummer: 18176086.9
(22) Anmeldetag: 05.06.2018
(51) Int. Cl.: B09C 1/10, C02F 3/10, C02F 3/34, C02F 1/48

(54) **BIOLOGISCHER ABBAU VON ORGANISCHEN HALOGENVERBINDUNGEN IN BELASTETEN GEWÄSSERN**

(71) Anmelder: MWK Bionik GmbH, 83093 Bad Endorf (DE)
(72) Erfinder: WACKERBAUER, Matthias, 83093 Bad Endorf (DE); UPHOFF, Christian, 83093 Bad Endorf (DE)
(74) Vertreter: Stolmár & Partner Patentanwälte PartG mbB

(57) **Zusammenfassung**

Die vorliegende Erfindung betrifft ein Bioremediations-Verfahren zur Reinigung von Gewässern, insbesondere von fließenden Gewässern, die mit organischen Halogenverbindungen (HKW) kontaminiert sind. Die Erfindung betrifft ferner auch Hydrgel-Beads, die darin eingeschlossene und/oder oberflächenadsorbierte HKW-abbauende Mikroorganismen und ggf. Magnetotakten aufweisen, und die Verwendung dieser Hydrogel-Beads in dem Bioremediations-Verfahren zur Reinigung von Gewässern.

## Beschreibung

### Technisches Gebiet

Die vorliegende Erfindung betrifft ein **Bioremediations-Verfahren** zur Reinigung von Gewässern und Sedimenten, insbesondere von fließenden Gewässern, die mit organischen Halogenverbindungen (HKW) kontaminiert sind. Die Erfindung betrifft ferner auch **Hydrogel-Beads,** die darin eingeschlossene und/oder oberflächenadsorbierte HKW-abbauende Mikroorganismen und Magnetotakten aufweisen, und die **Verwendung dieser Hydrogel-Beads** in dem Bioremediations-Verfahren zur Reinigung von Gewässern und Sedimenten.

### Stand der Technik

Mit wenigen Ausnahmen sind organische Halogenverbindungen (HKW) nicht natürlichen Ursprungs, sondern sind anthropogen verursacht. Viele dieser Stoffe haben schädliche Eigenschaften, wie z.B.:
- Langlebigkeit in der Umwelt, da sie nur sehr langsam biologisch oder chemisch abgebaut werden,
- Giftigkeit, wozu nicht nur die unmittelbare Giftwirkung zählt, sondern auch krebserzeugende, fruchtschädigende oder erbgutverändernde Wirkung und
- Anreicherungsfähigkeit im Körper (Fettgewebe) oder in der Nahrungskette (Muttermilch).

Langezeit wurden organischen Halogenverbindungen enthaltende Stoffe (z.B. Stoffe, die polychlorierte Biphenyle, chlorierte Kohlenwasserstoffe oder polychlorierte Dibenzo-p-dioxine enthalten) lediglich auf Sonderdeponien gelagert oder in einer Sondermüllverbrennungsanlage entsorgt.

Bei den bekannten thermischen Verfahren, bei denen auf dem Wege der Pyrolyse oder Verbrennung die Beseitigung organischer Schadstoffe bewerkstelligt werden kann, führen selbst zu erheblichen Emissionen, die die Umwelt belasten.

Zudem sind verschiedene mechanische und chemisch-physikalischen Reinigungsverfahren bekannt. Die meisten der bisher bekannten mechanischen und chemisch-physikalischen Reinigungsverfahren setzen allerdings voraus, dass das kontaminierte Substrat von der Fundstelle zu der Aufarbeitungsanlage bzw. zu der Deponie transportiert werden muss, was zum einen während des Transports eine Gefahr für die Umwelt darstellt, zum zweiten zusätzliche Transportkosten bei der Altlastenbeseitigung entstehen lässt und letztlich das gereinigte und bearbeitete Ökosystem vor Ort spärlich wieder aufgebaut werden muss.

Neben mechanischen und chemisch-physikalischen Reinigungsverfahren hat in der Umwelttechnik der Einsatz von Mikroorganismen für biologische Verfahren mittlerweile einen festen Platz eingenommen. Vorteil ist, dass durch mikrobielle Abbauvorgänge viele organische Schadstoffe oftmals vollständig zu CO₂ und H₂O abgebaut werden können. Auf diese Weise fallen keine Reststoffe (Abfallprodukte) an, die auf Sonderdeponien entsorgt, aufbereitet oder verbrannt werden müssen. Biologische Verfahren werden beispielsweise erfolgreich zur Abluftreinigung, zur Eliminierung von Stickstoffverbindungen, organischen Reststoffen sowie Phosphaten und Nitrat aus Abwässern als auch bei der Sanierung von kontaminierten Gewässern, Sedimenten und Böden eingesetzt.

Der biologische Abbau von HKWs beruht auf der schrittweisen Dechlorierung (Abspaltung von HCl) über verschiedene Transformationsprodukte bis zu chlorfreien Produkten. Von den vier bekannten biologischen Abbauprozessen ist die reduktive Dechlorierung deshalb am bedeutendsten, weil die Umsetzung von vollständig chloriertem LCKW wie PCE (Tetrachlorethen) zu TCE (Trichlorethen) nur unter anaeroben Bedingungen abläuft. Der weitere Abbau von chlorierten Ethen, Ethan und Methan kann sowohl anaerob, als auch aerob ablaufen, wobei die oxidative Umsetzung von Dichlor-Verbindungen schneller abläuft als die reduktive. Daher sind für die biologische Sanierung die schrittweise, anaerobe reduktive und die aerobe oxidative Dechlorierung als die wichtigsten Abbaumechanismen zu nennen. Die weitaus häufigsten Schäden sind auf die am meisten eingesetzten Verbindungen PCE und TCE zurückzuführen. Daher ist die folgende Abbaukette als die in der Praxis dominant anzusehen:

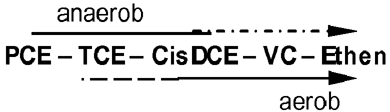

Bekannte biologischer Verfahren basieren auf dem Konzept des sog. erweiterten natürlichen Schadstoffminderungsprozesses (enhanced natural attenuation; ENA), der die Ausbringung einer mikrobiologischen Mischkultur in Nährstofflösung in flüssiger Form durch Beregnung und Injektion vorsieht. Die Reduzierung der Schadstoffe, ihre Toxizität und Mobilität erfolgt wie bei natürlichen Schadstoffminderungsprozessen (natural attenuation; NA) ebenso über den biologischen Abbau, der chemischen Transformation, Sorption, Dispersion und Diffusion. Um Verfrachtungen der Schadstoffe (z.B. organischer Halogenverbindungen) und der zum Einsatz kommenden Mischkultur durch arbeitsbedingte Verwirbelungen und Strömung zu vermeiden, erfordert dieses ENA-Konzept allerdings eine teilweise Trockenlegung des Flussbettes. Die Trockenlegung des Flussbetts muss ferner erfolgen, damit das darunterliegende Sediment durch den Einsatz von Beimpfungslanzen und Beregnungsanlagen behandelt werden kann.

Biologische Verfahren verwenden Bakterien und Pilze (Mikroorganismen), die organische Schadstoffe abbauen. Der Nachteil dieser Verfahren liegt daher zudem darin, dass eine lange Zeit, bedingt durch reversible und irreversible Hemmprozesse, für einen möglichst vollständigen Abbau der Schadstoffe notwendig ist, so dass, insbesondere über den Zeitbedarf des biologischen Abbauverfahrens gesehen, der Materialeinsatz immens ist, sodass ständig neue Mikroorganismen ausgebracht werden müssen.

### Aufgabe

Es ist daher eine Aufgabe der vorliegenden Erfindung, ein Verfahren zur Reinigung von Gewässern bereitzustellen, bei dem auf nachhaltige Beeinträchtigungen des Standortes, wie z.B. in Folge von Trockenlegung des Gewässers oder Ausbaggern von Sediment, verzichtet werden kann, wodurch die Umwelt nicht oder zumindest weniger beeinträchtigt wird.

Ferner ist es eine weitere Aufgabe der vorliegenden Erfindung, ein biologisches Verfahren zur Reinigung von Gewässern bereitzustellen, bei dem die Menge an auszubringenden Mikroorganismen und die Häufigkeit zur Wiederholung des Ausbringens reduziert ist.

### Lösung

Die vorgenannte Aufgabe wird durch ein Bioremediations-Verfahren unter Verwendung von mikrobiologisch dotierten Hydrogel-Körpern (Hydrogel-Beads) gemäß Anspruch 1 gelöst.

Weitere vorteilhafte Ausgestaltungen sind in den Unteransprüchen angegeben.

Das erfindungsgemäße Bioremediations-Verfahren zur Reinigung von Gewässern umfasst die folgenden Schritte:
a) Bereitstellen von mikrobiologisch dotierten Hydrogel-Beads, und
b) Ausbringen der mikrobiologisch dotierten Hydrogel-Beads in ein mit HKW belastetes Gewässer (Beimpfen),
**wobei** die Hydrogel-Beads darin immobilisierte HKW-abbauende Mikroorganismen (Bakterien und Pilze) umfassen.

In anderen Erscheinungsformen bezieht sich die vorliegende Erfindung auch auf die eingesetzten mikrobiologisch dotierten **Hydrgel-Beads,** die darin eingeschlossene und/oder oberflächenadsorbierte HKW-abbauende Mikroorganismen und Magnetotakten aufweisen, und die **Verwendung dieser Hydrogel-Beads** in dem Bioremediations-Verfahren zur Reinigung von Gewässern.

Ein Gewässer und somit das Sediment ist mit HKW belastet bzw. kontaminiert, wenn der Summenparameter AOX (Adsorbierbare organisch gebundene Halogene; das X wird allgemein als Abkürzung für ein beliebiges Halogen verwendet) einer zu messenden Probe den Grenzwert von 20 *µ*g/l überschreitet. Konzentrationen von ca. 60 bis 300 *µ*g/L AOX können mit ziemlicher Sicherheit spezifischen Emissionsquellen zugeordnet werden, die sich auch in einiger Entfernung von der Beobachtungsstelle befinden können. Der Summenparameter AOX gibt die Gesamtmenge der an Aktivkohle adsorbierbaren, schwach bis mittelpolaren organischen Halogenverbindungen an. Die Bestimmungsmethode für AOX ist in der DIN EN ISO 9562 (vormals DIN EN 1485 bzw. DIN 38409-H14) festgelegt. Der AOX kann in der wässrigen Phase oder auch im Feststoff bestimmt werden. Im Rahmen der orientierenden Messungen können Sedimente und auch das Wasser im Ablauf von Flüssen und Kläranlagen auf AOX untersucht werden. Bei der Bewertung der Messgröße AOX ist zu berücksichtigen, dass bestimmte polare Chlorverbindungen (z.B. Chlorethanol oder Chloressigsäure) nur schlecht an Aktivkohle binden und daher nur teilweise registriert werden. Ähnliches gilt für den Summenparameter EOX (Eluierbare organisch gebundene Halogene).

Der Begriff "Gewässer" umfasst im Sinne der Erfindung das Wasser des Gewässers als auch das Sediment, das durch das Wasser des Gewässers bedeckt und zum Halten des Wassers des Gewässers verantwortlich ist, sowie das Bodenmaterial der umliegenden Böschung und des Uferbereichs.

Das erfindungsgemäße Verfahren hat insbesondere den Vorteil, dass dadurch, dass das Verfahren bei laufendem Betrieb des Gewässers und des anhaltenden Abtransports von Abbauprodukten die Bildung von reversiblen und irreversiblen Hemmungen, vor Allem mit der durch pH-Wert Absenkung offenen Mineralienoberfläche (Bildung von Kieselsäure) verhindert wird.

Eine räumliche Fixierung der Mikroorganismen ("Immobilisierung") in den Hydrogel-Beads bringt dabei deutliche Vorteile und eröffnet neue Möglichkeiten der Prozessführung. So kann beispielsweise das zu reinigende Wasser an den immobilisierten Mikroorganismen vorbeigeleitet werden, ohne dass diese ausgetragen werden. Dies ist vor allem auch für langsam wachsende Mikroorganismen oder schwer abbaubare Schadstoffe vorteilhaft, die ohne Immobilisierung leicht ausgeschwemmt werden würden. Teure Arbeitsschritte wie Zellrückgewinnung und Wiederholungen der Mikroogranismenausbringung werden zudem vereinfacht und besser handhabbar.

Da das Hydrogel eine geringfügig höhere Dichte aufweist als Wasser des zu dekontaminierenden Gewässers, verhalten sich die mikrobiologisch dotierten Hydrogel-Beads in einer Strömung ähnlich wie feine Sedimente. Vorzugsweise liegt die Dichte der erfindungsgemäß eingesetzten Hydrogele im Bereich von 1,05 bis 1,2 g/ml.

Dies birgt einen großen Vorteil bei der Ausbringung der Mikroorganismen, da Hydrogel-Beads, die Mikroorganismen aufweisen, einem ähnlichen Verteilungsmuster wie das Kontaminent folgen, wenn diese am Ursprung der Kontamination in das Bachbett eingebracht (z.B. Staudamm) werden. Besonders vorteilhaft sammeln sich auch mehr Hydrogel-Beads im Bachbett an Stellen höherer Belastung mit PCB.

Vorteilhaft kann somit auf die Trockenlegung des Gewässers verzichtet werden. Vielmehr ist eine kurzzeitige Flutung bevorzugt.

Die Vorteile des erfindungsgemäßen Bioremidiations-Verfahrens unter Verwendung von mikrobiologisch dotierten Hydrogel-Beads können wie folgt zusammengefasst werden:
- der technische Aufwand vor Ort wird stark reduziert, da
- keine Trockenlegung des Flussbettes oder Ausbaggern von Sediment erforderlich ist (evtl. ist eher eine kurzzeitige Flutung des Gewässers wünschenswert),
- die Gefahr einer Schadstofffahne durch Verwirbelungen vermieden wird,
- die Verteilung der mikrobiologisch dotierten Hydrogel-Beads wie beim Schadstoff über die Strömung des Gewässers erfolgt, d.h. dort, wo gegenwärtig eine hohe Belastung an HKWs vorliegt, reichern sich nach Ausbringen der Hydrogel-Beads auch viele dieser Hydrogel-Beads-Beads,
- insgesamt geringerer Materialaufwand durch Immobilisierung erforderlich ist, da ein weit geringeres Ausschwemmverhalten der aktiven Biomasse aus den erfindungsgemäßen Hydrogel-Beads zu verzeichnen ist als bei herkömmlichen Ausbringverfahren.

Die Immobilisierung der HKW-abbauenden Mikroorganismen und Magnetotakten in einem Hydrogel gewährleistet eine gute Funktionalität und Langzeitaktivität der eingebetteten Zellen. Diese können somit über mehrere Monate hinweg Schadstoffe zuverlässig abbauen. Besonders vorteilhaft sind durch den Einsatz von mikrobiologisch dotierten Hydrogel-Beads daher nur geringe Nachimpfzyklen am Einsatzort erforderlich. Dieser Vorteil wird insbesondere dadurch verstärkt, da die Hydrogel-Beads durch die Magnetotakten gezielt an den Ort der HKW-Kontamination dirigiert und dort immobilisiert werden.

Bevorzugt wird das kontaminierte Gewässer zu Beginn des Verfahrens mit Hydrogel-Beads mit einer Konzentration von 0,25 kg bis 2 kg, bevorzugt 0,5 kg bis 0,75 kg Hydrogel-Beads pro m³ Sediment beimpft.

Das erfindungsgemäße Verfahren wird analytisch begleitet, so dass bei Bedarf, wie z.B. bei Starkregen, fließbedingten Verwirbelungen und Strömungen, ein gezieltes Nachimpfen des Gewässers mit der vorgenannten Konzentration an erfindungsgemäßen Hydrogel-Beads erfolgen kann.

Eine bekannte Form der Zellimmobilisierung ist die Einschlussimmobilisierung. Hier werden die Zellen in eine Matrix eingebettet ("Matrixeinschluss"). In der Regel handelt es sich hier um ein Hydrogel, welches aus einem Polymernetzwerk mit einem hohen Wasseranteil besteht. Die Gele können aus organischen, natürlichen Polymeren (z.B. Na-Alginat, Chitosan, Kollagen), oder im Sol-Gel-Verfahren (anorganische Gele z.B. SiO₂ basierend) hergestellt werden. Besonders bevorzugt erfolgt die Immobilisierung der Mikroorganismen in einem Hydrogel nach der vorbeschriebenen Einschlussimmobilisierung.

### Definitionen

### Hydrogel-Beads

Die vorliegende Erfindung betrifft auch mikrobiologisch dotierte Hydrogel-Beads zur Verwendung in dem Bioremediations-Verfahren zur Reinigung von Gewässern, wobei die Hydrogel-Beads zumindest immobilisierte (d.h. darin eingeschlossene und/oder oberflächenadsorbierte) HKW-abbauende Mikroorganismen und Magnetotakten aufweisen.

Hydrogele und deren Aufbau sind dem Fachmann grundsätzlich bekannt. Der Vollständigkeit halber sei aber erwähnt, dass unter einem Hydrogel im Sinne der vorliegenden Erfindung eine homogene Mischung aus mindestens einer festen Phase und einer flüssigen Phase, d.h. einer kolloidalen Dispersion, zu verstehen ist, wobei die feste(n) Phase(n), im Sinne der Erfindung Kieselsäure oder organische Hydrogelbildner (z.B. Alginat, Chitosan, Kollagen), als solche und/oder teilweise oder vollständig hydrolysiert, die kontinuierliche Phase und die Flüssigkeit(en) der flüssigen Phase, z.B. Wasser, Ethanol und Rückstände von Hydrogelbildner (Monomere, Vorläuferverbindungen) und/oder Aggregaten davon, homogen in der Struktur dispergiert sind.

Als Hydrogel ist allgemein ein Gel zu verstehen, bei dem die flüssige Phase Wasser ist oder wässrigen Lösungen besteht, das mehr als 50 Gew.-% (Gew.-%) Wasser enthält. Typischerweise enthält die flüssige Phase des Hydrogels >65% Gew.-%, vorzugsweise >90 Gew.-% und besonders bevorzugt >95 Gew.-% Wasser. Die flüssige Phase kann auch andere Flüssigkeiten enthalten, typischerweise organische Lösungsmittel, z.B. Ethanol. Üblicherweise beträgt die Konzentration solcher Lösungsmittel, z.B. Ethanol, <10 Gew.-%, vorzugsweise <3 Gew.-% und besonders bevorzugt <1 Gew.-%. Im Rahmen dieser Erfindung wird das Komposite der Erfindung als Hydrogel betrachtet, da es die Grundkriterien eines Hydrogels erfüllt. Bei Bezugnahme auf das Hydrogel der Erfindung ist diese Bezugnahme demnach gleichbedeutend mit einer Bezugnahme auf die Zusammensetzung der Erfindung. Im Rahmen dieser Erfindung besteht der Silica-Hydrogel-Verbund der Erfindung vorzugsweise aus 20 bis 70 Gew.-%, vorzugsweise 30 bis 60 Gew.-% und am meisten bevorzugt 40 bis 55 Gew.-% Wasser.

Hydrogel-Beads (Kugeln) sind im Wesentlichen kugel- und/oder tropfenförmige Polymernetzwerke, die durch Vernetzung ("Gelbildung") eines organischen Hydrogelbildners (z.B. Alginat, Gelatine) und/oder Kieselsäure gebildet sind und einen Durchmesser von 10 bis 1000 µm, besonders bevorzugt von 50 bis 500 µm, bestimmt mittels Laserbeugungsmethode, z.B. dynamische oder statische Lichtstreuungsverfahren, aufweisen. Die Vernetzung des Polymeren kann dabei sowohl chemischer als auch physikalischer Natur sein.

Der Fachmann weiß, dass zur Ausbildung eines Gels in Abhängigkeit des verwendeten Polymeren eine Mindestkonzentration des eingesetzten Polymeren erforderlich ist ("kritischen Gelbildungskonzentration"). Unterhalb dieser kritischen Gelbildungskonzentration ist nicht ausreichend Polymer zur Ausbildung eines unendlich ausgedehnten Polymernetzwerks vorhanden. Daher bilden sich zunächst lediglich einzelne Cluster. Sobald die kritische Gelbildungskonzentration erreicht ist, können diese Cluster zu einem durchgehenden, vernetzten Polymer zusammengesetzt werden, sodass bei dieser Konzentration der Sol-Gel-Übergang erfolgt. Die Werte für die kritische Gelbildungskonzentration typischer Gelbildner für unterschiedliche Temperaturen (LCST und UCST) sind dem Fachmann bekannt oder können dem Stand der Technik entnommen werden.

Bevorzugt weist das Polymernetzwerk der Hydrogel-Beads eine nano- und/ mikroporöse Struktur auf. Die intrinsischen Poren der Hydrogel-Beads weisen vorzugsweise einen Größenbereich von 5 bis 300 nm, besonders bevorzugt von 20 bis 250 nm auf und erlauben dadurch vorteilhaft die Dotierung der Hydrogel-Beads mit Mikroorganismen ("Immobilisierung").

Zusätzlich zu den intrinsischen Poren können die Hydrogel-Beads Diffusionskanäle mit einer Größenordnung im Bereich von 10 bis 50 µm aufweisen.

Der Begriff "Immobilisierung" bzw. "räumliche Fixierung" von Mikroorganismen, wie z.B. von HKW-abbauenden Mikroorganismen, umfasst erfindungsgemäß sowohl das Einschließen der Mikroorganismen in der Matrix der Hydrogel-Beads (z.B. in deren Poren) als auch die (physikochemische) Adsorption der Mikroorganismen auf der Oberfläche der Hydrogel-Beads.

Die Immobilisierung von Mikroorgansimen in dem erfindungsgemäßen Polymernetzwerk der Hydrogel-Beads hat sich vorteilhaft als schnelle, ungiftige und vielseitige Methode zur Immobilisierung von Mikroorganismen, wie z.B. von HKW-abbauenden Mikroorganismen erwiesen.

Zur Immobilisierung von Mikroorgansimen in dem Polymernetzwerk der erfindungsgemäßen Hydrogel-Beads wird ein Hydrogelbildner (Monomer), vorzugsweise ein organischer Hydrogelbildner (z.B. Alginat, Chitosan, Kollagen) oder Kieselsäure bereitgestellt, wobei durch das Inkontaktieren des Hydrogelbildners mit einem Polymerinitiator unter Anwesenheit der zu immobilisierenden Mikroorganismen die Polymerisation zu dem Netzwerk der mikrobiologisch dotierten Hydrogel-Beads initiiert wird. Die daraus hergestellten Hydrogel-Beads haben den Vorteil, dass die Matrix ihrer Polymernetzwerke biodegradabel ist und eine hohe Biokompatibilität aufweist. Die erfindungsgemäß verwendeten Polymernetzwerke sind daher biologisch unbedenklich und äußerst umweltfreundlich.

### Organische Hydrogelbildner

Organische Hydrogelbildner, die zur Immobilisierung von Mikroorganismen geeignet sind, sind im Sinne der vorliegenden Erfindung gelierende Polysaccharide und deren Derivate (d.h. Polysaccharide, die durch ihr Zusammenlagern über Wasserstoffbrückenbildungen Polymernetzwerke ausbilden) und sind bevorzugt aus der Gruppe bestehend aus Alginat, Carrageenan, Chitosan, Gelatine, Kollagen, Pektin, Xanthan-Glycerol und Mischungen davon, ganz besonders bevorzugt aus der Gruppe bestehend aus Alginat, Carrageenan, Chitosan und Mischungen davon ausgewählt. Ganz besonders bevorzugt ist der organische Hydrogelbildner ein Alginat und/oder Alginat-Derivat. Alternativ bevorzugt ist der organische Hydrogelbildner ein Chitosan und/oder Chitosan-Derivat (zu näheren Informationen siehe bspw. Yao et al. (Eds), Chitosan-based hydrogels: Functions and Applications, 2012) bzw. Carrageenan (zu näheren Informationen siehe bspw. Schaffner et al., Sci. Adv.,3 (2017), eaao6804 oder Rathjen et al. (Eds), Immobilisierung von Mikroorganismen in einer Matrix aus K-Carrageenan, Bundesforschungsanstalt für Ernährung 1998). Auch die Verwendung von Xanthan-Glycerol-Hydrogel ist dem Fachmann bekannt und beispielsweise in Bilanovic et al. (Carbohydr Polym. (2016), 148, 243-50) beschrieben.

Besonders bevorzugt werden als Alginate Alginsäure, Natriumalginat, Kaliumalginat, Ammoniumalginat, Calciumalginat und Propylenglykolalginat verwendet.

Es ist auch möglich, Alginsäurepulver (Alginsäure, Alginat und deren Salze) zu verwenden. Dadurch kann der pH-Wert des resultierenden Gels reguliert werden, und die Verwendung von nennenswerten Mengen an Alginsäure führt zur Bildung eines gemischten Calciumalginat-Alginsäure-Gels.

Organische Hydrogelbildner, insbesondere Alginate weisen eine hohe Affinität zu Erdalkalimetallen auf und bilden bei dem Vorhandensein von zweiwertigen Metallkationen (ausgenommen Mg²⁺) ionische Hydrogele aus. Die Affinität zu zweiwertigen Metallkationen nimmt in zunehmendem Maße von Ca²⁺<Sr²⁺<Ba²⁺ zu. Nach einer bevorzugten Ausgestaltung der vorliegenden Erfindung wird dem organischen Hydrogelbildner zur Initiierung der Polymerisation zu dem Polymernetzwerk der Hydrogel-Beads ein zweiwertiges Metallkation, vorzugsweise Ca²⁺-Ionen, Sr²⁺-Ionen und/oder Ba²⁺-Ionen als Polymerinitiator zugesetzt.

Eine Herausforderung bei der Herstellung der erfindungsgemäßen Hydrogel-Beads besteht in der Immobilisierung der Mikroorganismen in bzw. auf der Matrix der Hydrogel-Beads, da es beim Inkontaktbringen der mikroorganismenenthaltenden Lösung mit dem Hydrogelbildner schnell zu einer unerwünschten bzw. unkontrollierten Gelbildung ("Gelatisierung") kommt, wodurch nur ein geringer Anteil der bereitgestellten Mikroorganismen in dem Polymernetzwerk der Hydrogel-Beads immobilisiert werden.

Dem ganzen kann beispielsweise entgegengewirkt werden, indem die Komponenten (z.B. der Hydrogelbildner und/oder die mikroorganismenenthaltende Lösung) auf Temperaturen oberhalb von 60°C, bevorzugter oberhalb von 80°C vor dem Inkontaktbringen erwärmt werden. Der Fachmann weiß dabei, dass der Temperaturbereich nach oben nicht offen ist, sondern durch verschiedene Faktoren, wie z.B. die Siedetemperatur der Lösungsmittel, die Zersetzungstemperatur des Hydrogelbildners limitiert sind. Die Erwärmung der Komponenten kann allerdings nachteilig sein, da eine Schädigung der Mikroorganismen einsetzen kann.

Die vorgenannten Hydrogel-Beads auf Basis eines organischen Hydrogelbildners (z.B. Agarose) können beispielsweise wie folgt hergestellt werden:
(i) Bereitstellen einer mikrobiologischen Lösung, die HKW-abbauende Mikroorganismen und ggf. Magnetotakten mit einer Gesamtzellzahl von 10⁸ bis 10⁹ Zellen pro ml Lösung aufweisen;
(ii) Bereitstellen einer zweiten Lösung, enthaltend einen organischen Hydrogelbildner (z.B. Alginat, Chitosan, Kollagen) mit einer Konzentration von 1 bis 20 Gew.-%, bevorzugt weniger als 10 Gew.-%;
(iii) Mischen der mikrobiologischen Lösung aus (i) und der zweiten Lösung aus (ii) im Verhältnis von 0,1:10 bis 10:10, besonders bevorzugt im Verhältnis von 0,5:10 bis 2,5:10;
(iv) Inkontaktbringen der gemischten Lösung aus (iii) mit zweiwertigen Metallkationen (z.B. Ca²⁺, Sr²⁺-Ionen und/oder Ba²⁺) als Polymerinitiator.

Nach einer bevorzugten Ausgestaltung der vorliegenden Erfindung ist zumindest einer der Lösungen, z.B. dem organischen Hydrogelbildner (Lösung aus (ii)) und/oder der mikroorganismenenthaltenden Lösung (Lösung aus (i)) ein Komplexbildner (z.B. EDTA, Bernsteinsäure, Malonsäure, Milchsäure, Weinsäure und Zitronensäure) mit einer Konzentration von 0,1 bis 2 Vol.-%, besonders bevorzugt 0,8 bis 1,4 Vol.-% bezogen auf das vereinigte Volumen von Komplexbildner und mikroorganismenenthaltender Lösung zugesetzt. Der Zusatz eines Komplexbildners ermöglicht vorteilhaft eine schonende und schnelle Immobilisierung der Mikroorganismen in dem zu bildenden Hydrogel.

Besonders bevorzugt ist der Komplexbildner ausgewählt aus der Gruppe bestehend aus Äpfelsäure, Bernsteinsäure, Glykolsäure, Malonsäure, Milchsäure, Oxalsäure, Weinsäure, Zitronensäure, deren Salzen und Mischungen davon. Ganz besonders bevorzugt besteht der Komplexbildner aus Bernsteinsäure, Weinsäure, Zitronensäure, deren Salzen oder Mischungen davon.

Bevorzugt erfolgt das Inkontaktbringen in Schritt (iv) durch Eintropfen der Lösung aus (iii) in eine gesättigte Lösung enthaltend das zweiwertige Metallkationen (z.B. Ca²⁺).

In einer alternativen Ausführungsform kann vorgesehen sein, dass die Hydrogel-Beads auf Basis eines organischen Hydrogelbildners (z.B. Agarose) wie folgt hergestellt werden:
(i) Bereitstellen einer mikrobiologischen Lösung, die HKW-abbauende Mikroorganismen und ggf. Magnetotakten mit einer Gesamtzellzahl von 10⁸ bis 10⁹ Zellen pro ml Lösung und zweiwertigen Metallkationen (z.B. Ca²⁺, Sr²⁺-Ionen und/oder Ba²⁺) als Polymerinitiator aufweisen;
(ii) Bereitstellen einer zweiten Lösung, enthaltend einen organischen Hydrogelbildner (z.B. Alginat, Chitosan, Kollagen) mit einer Konzentration von 1 bis 20 Gew.-%, bevorzugt weniger als 10 Gew.-%;
(iii) Mischen der mikrobiologischen Lösung aus (i) und der zweiten Lösung aus (ii) im Verhältnis von 0,1:10 bis 10:10, besonders bevorzugt im Verhältnis von 0,5:10 bis 2,5:10, wodurch die Polymerisation zu dem Netzwerk der Hydrogel-Beads initiiert wird;
(iv) Dosieren/Portionieren des polymerisationsinitiierten, homogenen Gemischs zu mikrobiologisch dotierten Hydrogel-Beads.

Das letztgenannte Verfahren zur Herstellung der erfindungsgemäßen Hydrogel-Beads hat den Vorteil, dass die erfindungsgemäßen mikrobiologisch dotierten Hydrogel-Beads direkt an ihrem entsprechenden Einsatzort bereitgestellt werden können, sodass auf eine Zwischenlagerung verzichtet werden kann.

Nach einer bevorzugten Ausgestaltung der vorliegenden Erfindung weist die Lösung, umfassend die Hydrogel-Beads eine Zellzahl im Bereich von 10⁷-10⁸ Zellen/ml Lösungsmittel auf.

Typischerweise liegt die Gesamtzelldichte in den mikrobiologisch dotierten Hydrogel-Beads im Bereich von 1 x 10⁵ bis 1 x 10⁹ Zellen pro mg Hydrogel-Bead, ganz besonders bevorzugt im Bereich von 1 x 10⁷ bis 1 x 10⁸ Zellen pro mg Hydrogel-Bead.

Der Fachmann weiß, dass er die Porosität der Hydrogel-Beads in Abhängigkeit des verwendeten Lösungsmittels und der Ausgangsstoffe einstellen kann.

Nach einer bevorzugten Ausgestaltung der vorliegenden Erfindung wird als ein nicht toxisches Lösungsmittel, wie z.B. Glycerolformal oder Isopropylidenglycerin eingesetzt.

Die erfindungsgemäßen Hydrogel-Beads könne zur Löslichkeitsvermittlung auch Tenside, vorzugsweise anionische Tenside umfassen, die aus der Gruppe bestehend aus Fettsäureestern bzw. -amiden von Hydroxy- oder Aminocarbonsäuren bzw. -sulfonsäuren, wie z. B. die Fettsäuresarcoside, -glykolate, -lactate, -tauride oder isäthionate ausgewählt sind.

### Kieselsäure-Hydrogel-Beats

Als Sol ist eine homogene Mischung aus mindestens einer flüssigen Phase und einer festen Phase, d.h. einer kolloidalen Dispersion, zu verstehen, wobei die flüssige(n) Phase(n), z.B. Wasser, Ethanol und Rückstände von Kieselsäurevorläufern, die kontinuierliche Phase ist und die feste(n) Phase(n), z.B. kolloidale Kieselsäureteilchen und/oder als teilweise oder vollständig hydrolysierte Kieselsäure und/oder Aggregate dieser Teilchen in der flüssigen Phase homogen dispergiert sind.

Nach einer bevorzugten Ausgestaltung der vorliegenden Erfindung sind die Hydrogel-Beads als sog. Kieselsäure-Hydrogel-Beats ausgebildet, wobei das Polymernetzwerk der Hydrogel-Beads durch Kieselsäure und/oder deren hydrolytisch aktiven Kieselsäurederivate gebildet ist.

Kieselsäure-Hydrogel-Beats werden im Rahmen der vorliegenden Erfindung Kieselsäureteilchen bezeichnet, die durch Sprühtrocknung oder Flüssigphasensynthese, durch Zerkleinern von gesponnenen oder gezogenen Kieselsäurefasern, durch Formen oder Gießen von Kieselsäuremonolithen und, falls erforderlich, durch Zerkleinern von geformten oder gegossenen Kieselsäuremonolithen hergestellt werden. Im Rahmen der vorliegenden Erfindung bezeichnet die Flüssigphasensynthese z.B. die Emulsionspolymerisation, das Sol-Gel-Verfahren oder die molekulare Selbstorganisation.

Kieselsäure bezieht sich im Rahmen der vorliegenden Erfindung vorzugsweise auf amorphe Kieselsäure als solche, wasserhaltige amorphe Kieselsäure, vollständig oder teilweise hydrolysierte amorphe Kieselsäure oder Kieselsäure in wassergelöster Form, wie Kieselsäure.

Nach einer bevorzugten Ausgestaltung der vorliegenden Erfindung erfolgt die Initiierung der Polymerisation zu dem Polymernetzwerk der mikrobiologisch dotierten Kieselsäure-Hydrogel-Beats mittels der Flüssigphasensynthese durch einen pH-Shift auf einen pH-Wert in den Bereich von 4 bis 7.

### Organische Halogenverbindungen und Kongeneren

Organische Halogenverbindungen im Sinne der vorliegenden Erfindung sind synthetische und natürlich vorkommende polychlorierte Biphenyle (PCB), polychlorierte Phenole (PCP), polychlorierte Dibenzo-p-dioxine (PCDD), polychlorierte Dibenzofurane (PCDF), polychlorierte Carbazole (PCCZ), polychlorierte Naphthaline (PCN) und leichtflüchtige chlorierte Kohlenwasserstoffe (LCKW).

Die natürlich gebildeten Mengen von organische Halogenverbindungen, insbesondere halogenierten Phenolen erreichen lokal oft hohe Konzentrationen, wie z.B. im Sediment von Gewässern oder im Waldboden. Als mögliche Vorstufen für die Bildung von Chlorphenolen im Waldboden kommen chlorierte Anisylmetabolite (CAM) in Frage, die durch verschiedene Weißfäule-Pilze wie *Bjerkandera adusta* (Rauchporling), *Lepista nuda* (Violetter Rötel-Ritterling) und *Hypholoma fasciculare* (Grünblättriger Schwefelkopf) oder auch *Penicillium* sp. gebildet werden.

Besonders bevorzugt sind organische Halogenverbindungen (HKW), wie halogenierte C₁- und C₂-Verbindungen, insbesondere Methylenchlorid, Vinylchlorid (VC), Cichlorethen (DCE), Trichlorethen (TCE), Tetrachlorethen (PCE), Tetrachlorethan (TeCA), sowie polychlorierte Biphenyle (PCB) und polychlorierte Phenole (PCP).

Die organischen Halogenverbindungen weisen bevorzugt eine Wasserlöslichkeit bei 25°C bezogen auf das Gewicht von maximal 10%, bevorzugt maximal 5%, mehr bevorzugt maximal 3%, ganz besonders bevorzugt maximal 1% auf, meist bevorzugt löst sich die chlorierte Substanz bei 25°C im Wesentlichen nicht (weniger als 1 × 10⁻⁹ bezogen auf das Gewicht) in Wasser.

**Kongenere** sind chemische Verbindungen, die durch ihren Ursprung oder ihre Struktur zueinander in Beziehung stehen. Häufig weisen Kongenere die gleiche Grundstruktur auf. Die Summenformeln zweier Verbindungen, die Kongenere sind, können sich unterscheiden; es handelt sich nicht zwangsläufig um Isomere.

### HKW-abbauende Mikroorganismen

HKW-abbauende Mikroorganismen sind in der Lage Kongenere synthetischer und natürlicher polychlorierter Biphenyle (PCB), polychlorierte Phenole (PCP), polychlorierter Dibenzo-p-dioxine (PCDD), polychlorierter Dibenzofurane (PCDF), polychlorierter Carbazole (PCCZ), polychlorierter Naphthaline (PCN) und leichtflüchtiger chlorierter Kohlenwasserstoffe (LCKW) abzubauen.

Bevorzugte HKW-abbauende Mikroorganismen sind im Sinne der vorliegenden Erfindung aus der Gruppe umfassend *Dehalobacter restrictus, Dehalococcoides, Desulfomonile, Desulfuromonas, Desulfitobacterium* und Mischungen davon ausgewählt.

Durch den Einsatz der HKW-abbauenden Mikroorganismen, die in den Hydrogel-Beads immobilisiert sind, werden am Sediment von in einem belasteten Gewässer bei einer Temperatur von 15 °C vorteilhaft Abbauraten für LCKW, insbesondere TCE auf <1% nach einer Einwirkzeit von 28 Tagen ermittelt. Vorteilhaft kann die Kontamination mit Cis-Dichlorethen (CisDCE) nach einer Einwirkzeit von 28 Tagen unterhalb der Nachweisgrenze reduziert werden.

Besonders bevorzugt beträgt die Abbaurate aller HKWs durch Einsatz der Hydrogel-Beads in dem erfindungsgemäßen Bioremediations-Verfahren in einem fließenden, belasteten Gewässer 7% nach einer Einwirkzeit von mindestens 21 Tagen unter natürlichen Umweltbedingungen.

Typischerweise liegt die Zelldichte an HKW-abbauende Mikroorganismen in den mikrobiologisch dotierten Hydrogel-Beads im Bereich von 1 x 10⁴ bis 1 x 10⁷, besonders bevorzugt im Bereich von 1 x 10⁵ bis 1 x 10⁶ Zellen pro mg Hydrogel-Bead beträgt Das **Myzele** ist die Gesamtheit aller Hyphen, der fadenförmigen Zellen eines Pilzes oder Bakteriums. Die Hyphen dienen Bakterien quasi als Straßen auf denen Mikroorganismen in den Untergrund gelangen können. Mit Hilfe des Hyphenwachstums können Bakterien störungsfrei im Boden verteilt und gleichzeitig die Bodenstruktur durch Aggregieren stabilisiert werden. Eine große Anzahl myzelbildender Pilze und Bakterien (z.B. *Streptomyces* Arten), die ein Pilz-ähnliches Myzel bilden, wurde bereits auf Ihre Fähigkeit hin getestet, selbst organische HKWs wie z.B. PCB und PAK abzubauen.

Nach einer bevorzugten Ausgestaltung der vorliegenden Erfindung umfassen die immobilisierten Mikroorganismen daher auch myzelbildende Pilze und Bakterien (z.B. *Streptomyces* Arten), die ein Pilz-ähnliches Myzel bilden, um das Auswachsen der HKW-abbauenden Mikroorganismen und deren Tiefentransport in das Sediment zu gewährleisten.

Typischerweise liegt die Zelldichte an myzelbildende Pilze und Bakterien (z.B. *Streptomyces* Arten), die ein Pilz-ähnliches Myzel bilden, in den mikrobiologisch dotierten Hydrogel-Beads im Bereich von 1 x 10³ bis 1 x 10⁶, besonders bevorzugt im Bereich von 1 x 10⁴ bis 1 x 10⁵ Zellen pro mg Hydrogel-Bead beträgt

### Magnetotakten

Es wurde festgestellt, dass sich organische halogenhaltige Kohlenwasserstoffe zu annähernd 100 % an die Oberfläche von Sedimenten in einem Gewässer anlagern. Aufbauend auf dieser Erkenntnis weisen die erfindungsgemäßen Hydrogel-Beads nach einer bevorzugten Ausgestaltung der vorliegenden Erfindung Magnetotakten auf, die sich grundsätzlich entlang von Magnetfeldlinien auf Sedimentoberflächen bewegen und somit in der Lage sind, den Hydrogel-Bead zum Ort der Kontamination zu "dirigieren". Vorzugsweise lassen sich die Hydrogel-Beads durch den kombinierten Einsatz mit immobilisierten Magnetotakten zellaktiv und gezielt an den Ort der HKW-Kontamination dirigieren.

Magnetotakten (auch magnetotaktische Mikroorganismen genannt) sind einzellige Mikroorganismen (meist Bakterien), die die Fähigkeit aufweisen, sich im geomagnetischen Erdmagnetfeld auszurichten und entlang der Magnetfeldlinien zu wandern, wobei diese Fähigkeit auf intrazellulären magnetischen Partikeln (sog. Nanomagneten) beruht (siehe bspw. Byrne et al., Nanotechnology 22 (2011) 455709 (9pp)). Die intrazellulären magnetischen Partikel sind dabei in membranumhüllten Zellorganelle (Magnetosome) angeordnet und enthalten oft Magnetit und/oder Eisensulfid. Magnetotakten streben zumeist den nächstgelegenen Erdmagnetpol an und können sich dabei zusätzlich an der Sauerstoffkonzentration orientieren.

Bevorzugte Magnetotakten sind im Sinne der vorliegenden Erfindung magnetotaktische Bakterien (MTB), die aus der Gruppe *Geobacter metallireducens, Geobacter sulfurreducens, Magnetospirillum magneticum, Magnetospirillum gryphiswaldense, Magnetospirillum magnetotacticum, Magnetococcus sp., Desulfovibrio magneticus* und *Candidatus Magnetobacterium bavaricum* und Mischungen davon ausgewählt sind.

Typischerweise liegt die Zelldichte an Magnetotakten in den mikrobiologisch dotierten Hydrogel-Beads im Bereich von 1 x 10⁵ bis 1 x 10⁸, besonders bevorzugt im Bereich von 1 x 10⁶ bis 1 x 107 Zellen pro mg Hydrogel-Bead beträgt.

Es ist bereits bekannt, dass isolierte Partikel, die nullwertiges, nanoskaliges Eisen (sog. Nanoeisen) als Elektronendonator aufweisen, für den Dekontaminationsprozess und die Sanierung von Grundwasserschäden durch leicht- und schwerflüchtige Kohlenwasserstoffe verwendet werden können. Mit Nanoeisen lässt sich, wie bspw. in Publikationen von Zhang et al. (2003) und Müller et al. (2006) beschrieben, ein breites Spektrum von organischen Substanzen abbauen, wie z.B. halogenierte Methane (Tetrachlormethan, Trichlormethan, Bromchlormethan); nicht jedoch Di- und Chlormethan; chlorierte Ethene (Tetra- und Trichlorethen, 1,1-Dichlorethen, cis und trans 1,2-Dichlorethen, Chlorethen); chlorierte Ethane [Hexa- und Pentachlorethan (PCE), 1,1,1,2- und 1,1,2,2-Tetrachlorethan, 1,1,2- und 1,1,1-Trichlorethan (TCE), 1,1-Dichlorethan (DCE)], nicht jedoch 1,2-Dichlorethan; weitere polychlorierte Kohlenwasserstoffe (wie polychlorierte Biphenyle und polyhalogenierte Dibenzodioxine); Chlorbenzene (Hexa-, Penta-, Tetra-, Tri- und Dichlorbenzen, Chlorbenzen); einige halogenierte Herbizide und Pestizide (wie DDT, Lindan) und Pentachlorphenol.

Allerdings ist es in jedem Einzelfall erforderlich, die Eignung von isolierten Nanoeisen (auch Nanoeisensuspension) zu prüfen, wobei die Einsatzmöglichkeiten einer Nanoeisensuspension insbesondere von der Konzentration des Nanoeisens, der hydraulischen Durchlässigkeit des Untergrundes (Korngrößenverteilung des Aquifers, bestehende Fließwege), der Fließgeschwindigkeit des Grundwassers, dem Injektionsdruck sowie der Injektionsrate und -dauer abhängt.

So ist die Effizienz des eingesetzten isolierten Nanoeisens ist insbesondere limitiert durch
- die unzureichende Kenntnis der Aquiferbeschaffenheit, der bevorzugten Fließwege und des Schadensherdes;
- eine ungleichmäßige Verteilung des Nanoeisens im Grundwasser durch Agglomeration der Nanopartikel oder -kolloide sowie ihre starke Adsorption an die Bodenmatrix;
- die Schadstoffkonzentration in der gesättigten Bodenzone;
- die Reaktion des Nanoeisens auch mit Wasserinhaltsstoffen wie Nitrat, Sulfat oder Sauerstoff;
- standortspezifische Nebenreaktionen (wie das Absinken des Redoxpotenzials und eine Verringerung der Grundwasserhärte unter pH-neutralen oder basischen Bedingungen).

Zudem entsteht ein unerwünschter Effekt, wenn agglomerierte Nanopartikel die Poren der Bodenmatrix verstopfen und dadurch ein Durchströmen des kontaminierten Grundwassers verhindern.

Das erfindungsgemäße Verfahren bietet dabei insbesondere den Vorteil, dass durch den Einsatz von Magnetotakten auf die externe Zugabe von Nanoeisen (Fe⁰ und/oder Fe³⁺), bspw. in Form von Nanoeisen verzichtet werden kann. Besonders vorteilhaft ist das Nanoeisen zellulär in den Magnetotakten gebunden und daher gegenüber künstlich zugesetztem Eisen nicht umwelttoxisch. Gleichwohl können die vorteilhaften Eigenschaften des Nanoeisens, das als Elektronendonator für den Dekontaminationsprozess, insbesondere für die Dechlorierung von chlorierten Kohlenwasserstoffen fungiert, ausgenutzt werden.

Nach einer besonders bevorzugten Ausgestaltung der vorliegenden Erfindung sind die Magnetotakten in der Lage die Sedimentoberflächentemperatur lokal zu erhöhen, wodurch die Abbaurate der HKWs durch die HKW-abbauenden Mikroorganismen erhöht wird. Insbesondere bei stark kontaminierten Altlastensituationen sind die erfindungsgemäß eingesetzten Magnetotakten in der Lage die Sedimentoberflächentemperatur lokal und oberflächennah durch Demineralisation von einer Temperatur von 3,0 °C auf Temperaturen im Bereich von 10 bis 20 °C, besonders bevorzugt auf Temperaturen im Bereich von 12,5 bis 17,5 °C zu erhöhen.

### Feldstärkenerhöhung durch Cofermentation mit magnetotaktischen Mikroorganismen

Die Membranen lebender Zellen stellen ohne Ausnahme eine elektrische Potenzialdifferenz dar [ca. 100 mV, entsprechend einer Feldstärke von 10 MV/m bei 10 nm Membrandicke] (Neumann, 1998). Eine extreme Verstärkung der Potenzialdifferenz auf 420 - 450 mV wird erreicht, durch die Kombination von Magnetotakten. Die elektrische Feldstärke erreicht bis zu 50 MV/m bei 10 nm dicken Membranen. Der gemessene Frequenzbereich liegt dabei zwischen 65 KHz und 320 KHz. Durch die Erhöhung der elektrischen Feldstärke kommt es zur Öffnung der simultan geschalteten Rezeptorkanäle und einer Verschiebung der Ca²⁺ und Mg²⁺ Ionen. Beim parallel ablaufenden Kathabolismus wird Kohlendioxid nach vorhegender Oxidation abgespaltet. Die Oxidation erfolgt im Stoffwechsel durch Entzug von Wasserstoff.

Bei der Dunkelreaktion wird chemische Energie unter Verwendung von CO₂ zu organischen Verbindungen reduziert und durch Lichtreaktionen, dem wichtigsten biologischen Prozess auf der Erde, wird Lichtenergie in chemische Energie umgewandelt.

Der natürliche Abbau (d.h. ohne das erfindungsgemäße Verfahren und ohne den Zusatz erfindungsgemäßer Hydrogel-Beads) von HKWs am Sediment von Gewässern dauert bei Temperaturen von 13,5 bis 16,0 °C ca. 2,5 Jahre.

### Chemiesorption

Hierin ist die Chemisorption eine spezielle Form der Adsorption, bei der im Unterschied zur Physisorption das Adsorbat durch stärkere chemische Bindungen an das Adsorbens (Substrat bzw. Sediment) gebunden wird. Durch die Chemisorption wird das Adsorbat und/oder das Adsorbens chemisch verändert.

### Physisorption

Hierin ist die Physisorption eine Form der Adsorption, bei der - im Unterschied zur Chemisorption - ein Adsorbat durch physikalische Kräfte auf einem Substrat bzw. Sediment gebunden wird. Beispiele einer solchen physikalischen Kraft ist z. B. elektrostatische Anziehungskraft, Dipol-Dipol Wechselwirkung, Van-der-Waals-Kraft oder London'sche Dispersionskraft.

### Ausführungsbeispiele

Anhand nachfolgender Figuren und Ausführungsbeispiele soll die vorliegende Erfindung näher erläutert werden, ohne die Erfindung auf diese zu beschränken.

Dabei zeigen:
- **Fig. 1:**: eine schematische Darstellung von immobilisierten Mikroorganismen in Hydrogel-Beads mit "superporösen" Kanalstrukturen.
- **Fig. 2:**: den experimentellen Aufbau des Abbauversuchs unter online-Messung des pH-Werts (pH), des Redoxpotentials (Redox) und der Leitfähigkeit (LF). Zugleich werden Proben entnommen und extern analysiert.
- **Fig. 3:**: den Abbau von vier verschiedenen PCB Kongeneren von lebenden Oberflächen-Sedimentproben bei 4°C gemäß Ausführungsbeispiel 2. Die Werte beziehen sich relativ auf die Ausgangskonzentration. Die Fehlerbalken repräsentieren die Standardabweichung.
- **Fig. 4:**: den Abbau von vier verschiedenen HKWs von Oberflächen-Sedimentproben bei 15°C gemäß Ausführungsbeispiel 3.
- **Fig. 5:**: den schematischen Aufbau für eine Form der Zweikanal-Synthese von mikrobiologisch dotierten Hydrogel-Beads mit einem Hydrogelbildner. Die Pfeile zeigen die Flussrichtung der Lösungen an.

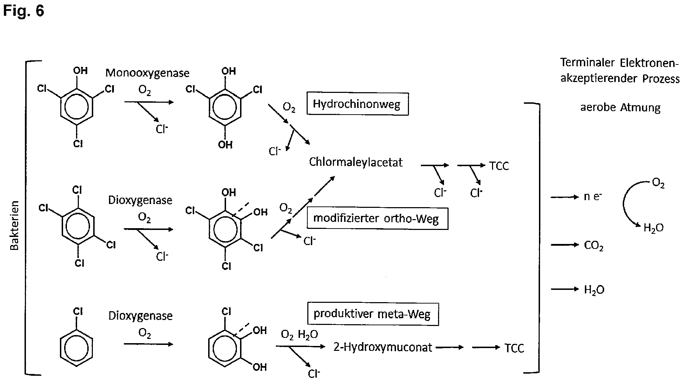

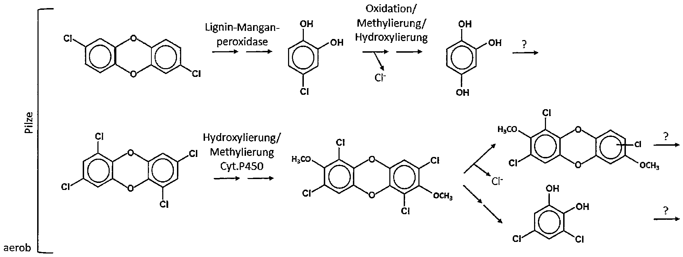

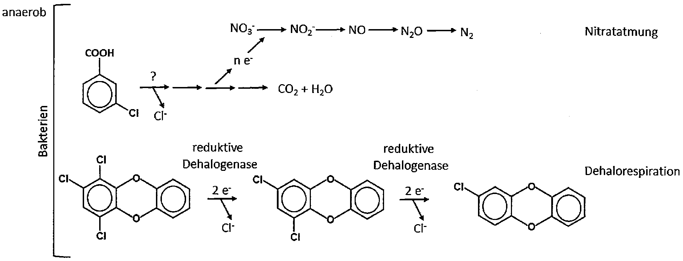

- **Fig. 6:**: die mikrobiellen Abbauprozesse von chloraromatischen Verbindungen unter aeroben und anaeroben Bedingungen. Der Übersichtlichkeit halber sind die Produkte nicht in stöchiometrischen Mengen angegeben.

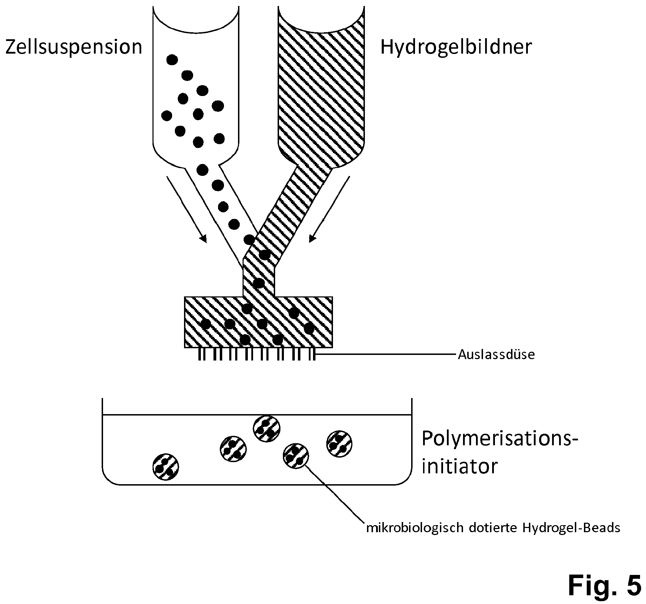

**Figur 5** ist der schematische Aufbau für eine Form der Zweikanal-Synthese von mikrobiologisch dotierten Hydrogel-Beads zu entnehmen. Dabei werden zumindest eine erste Lösung, enthaltend die Mikroorganismen (z.B. HKA-abbauende Mikroorganismen), und eine zweite Lösung, enthaltend den organischen Hydrogelbildner (z.B. Alginat) oder Kieselsäure, getrennt voneinander gelagert und in einer Vorkammer über zwei separate Kanäle miteinander zu einem homogenen Gemisch vereinigt. Das idealerweise homogene Gemisch wird anschließend über Auslassdüsen in Tropfen eines vordefinierten Volumens dosiert und in eine Lösung enthalten den Polymerinitiator eingetropft oder eingespritzt, wobei durch das Inkontaktieren des homogenen Gemischs, enthaltend den organischen Hydrogelbildner (z.B. Alginat) oder Kieselsäure mit dem Polymerinitiator die Polymerisation zu dem Netzwerk der Hydrogel-Beads initiiert wird und gleichzeitig die Mikroorganismen in dem entstehenden Polymernetzwerk der Hydrogel-Beads immobilisiert werden.

In einer alternativen Ausführungsform (nicht gezeigt) kann vorgesehen sein, dass in dem Verfahren zur Zweikanal-Synthese von mikrobiologisch dotierten Hydrogel-Beads zumindest eine erste Lösung, enthaltend den organischen Hydrogelbildner (z.B. Alginat) oder Kieselsäure, und eine zweite Lösung, enthaltend die Mikroorganismen (z.B. HKA-abbauende Mikroorganismen) und den Polymerinitiator getrennt voneinander bereitgestellt werden und in einer Vorkammer über zwei separate Kanäle miteinander zu einem homogenen Gemisch vereinigt werden, wodurch die Polymerisation zu dem Netzwerk der Hydrogel-Beads bereits in der Vorkammer initiiert wird. Das polymerisationsinitiierte, homogene Gemisch kann anschließend über die Auslassdüsen in Tropfen eines vordefinierten Volumens dosiert/portioniert und direkt in ein zu reinigendes, belastetes Gewässer eingetropft oder eingespritzt werden. Dies hat den Vorteil, dass die erfindungsgemäßen mikrobiologisch dotierten Hydrogel-Beads direkt an dem entsprechenden Einsatzort bereitgestellt werden können.

### Beispiel 1: Herstellung von Hydrogel-Beads auf Basis von Alginat

Die Alginat-Ca-Hydrogel-Beads wurden wie zuvor beschrieben mit einigen Modifikationen hergestellt (Song, Yu, Gao, Liu, & Ma, 2013). 10 mL einer Bernsteinsäure-Ca-Alg-Mischung aus Bernsteinsäure, Ca²⁺-Ionen und Alginat (beinhaltend eine finale Konzentration von 1% w/v Alginat und 50 mM Bernsteinsäure-Ca, pH = 7.2) mit 1 x 1010 CFU/mL *Dehalococcoides* mit einer Zellzahl von 1 x 10⁷ und *Magnetospirillum gryphiswaldense* mit einer Zellzahl von 2,5 x 10⁹ wurden in 50 mL Flüssigkeit paraffin mit 0,5% (v/v) Span 85 unter Rühren bei 200 U/min für 30 min dispergiert. Nach Bildung der Emulsion wurde der Emulsion langsam Eisessigsäure (0,05% v/v) zugesetzt und für 10 min unter Rühren bei 200 U/min zur Freisetzung von Ca²⁺-Ionen für die Gelierung verwendet. Die Alginat-Ca-Hydrogel-Beads wurden durch Abtrennen des Trichters gesammelt und mit destilliertem Wasser gewaschen, um das Öl (flüssiges Paraffin) für weitere Versuche zu entfernen.

Die so erhaltenen Hydrogel-Beads enthielten *Dehalococcoides* mit einer Zellzahl von 1 x 10⁵ und *Magnetospirillum gryphiswaldense* mit einer Zellzahl 2,5 x 10⁷ pro mg Hydrogel-Beads.

Zunächst wurde eine Lösung enthaltend Bernsteinsäure und Ca²⁺ durch Mischen von 100 mM-Lösungen von Bernsteinsäure und Calciumchlorid (Verhältnis 1:1 v/v) hergestellt und anschließend der pH-Wert (2,0, 3,0, 4,0, 5,0, 6,0 und 7,0) mit Natriumhydroxid oder Salzsäure entsprechend eingestellt. Die Alginatlösung wurde durch Auflösen von Natriumalginat (2 Gew.-%) in deionisiertem Wasser und Mischen der Lösung mit 0,1 % Dextranblau zu einer blauen Lösung hergestellt. Anschließend wurden Alginat und Bernsteinsäure-Ca-Lösung im Verhältnis 1:1 (v/v) gemischt.

Anschließend erfolgt das Eintropfen der Lösung in eine gesättigte Ca²⁺-Lösung.

### Beispiel 2: Testanordnung 1 mit Hydrogel-Beads auf Alginatbasis

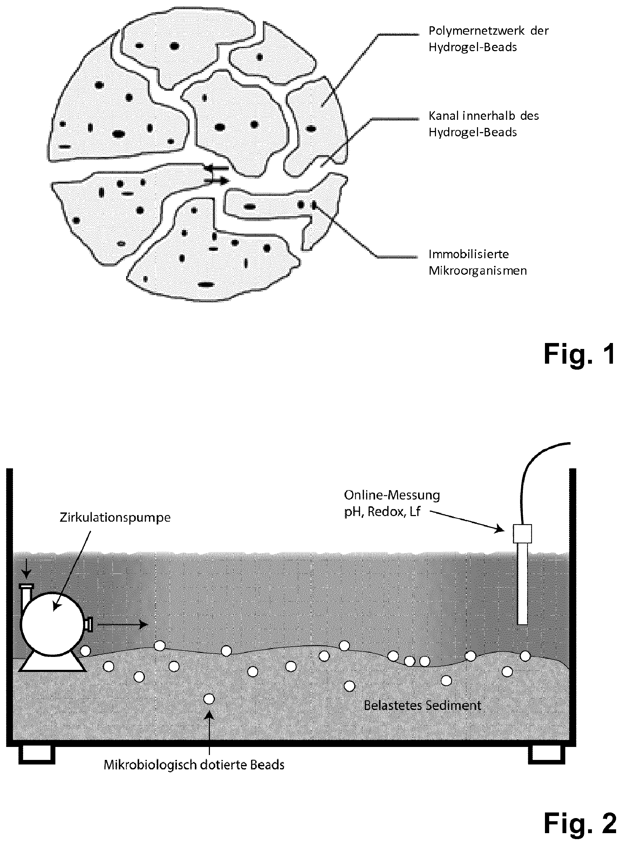

Im Versuch wurde ein Fluss simuliert. Hierzu wurde ein Aquarium mit einem Gesamtfassungsvolumen von 50 l genutzt, in das die Probe gegeben wird. Anschließend werden 10 l Leitungswasser und 50 g der mikrobiologisch dotierten Beads auf Alginatbasis (hergestellt, wie unter Beispiel 1 beschrieben) zugesetzt. Das Aquarium wird mit einer Folie abgedeckt, um die Verdampfung des Wassers zu reduzieren. Ober- und unterhalb des Aquariums wird ein Magnet angebracht, um das Magnetfeld der Erde zu simulieren. Eine Umwälzpumpe bewegte die Flüssigkeit 24 h am Tag für die ersten 5 Tage des Versuchs. Im Anschluss daran wurde die Pumpe über eine Zeitschaltuhr im Wechsel für eine Stunde in Betrieb genommen und für zwei Stunden ausgeschaltet. Während der gesamten Versuchsdauer von 3 Wochen wurden alle zwei Stunden pH, Leitfähigkeit und Temperatur der Versuchsflüssigkeit gemessen. Nach 5 Tagen Inkubation werden erneut 50 g mikrobiologisch dotierten Beads (hergestellt, wie unter Beispiel 1 beschrieben) dem Wasser zugegeben. Der experimentelle Aufbau des Abbauversuchs ist in Figur 2 dargestellt.

Nach 21 Tagen wurde der Versuch beendet. Zum einen wird hier ein mikroskopisches Präparat des bakteriellen Mikrofilms aus dem Becken entnommen und betrachtet. Darüber hinaus wurde das Wasser manuell abgenommen und der Schlamm zur Untersuchung entnommen. Es werden die gleichen Parameter wie vor dem Versuch mittels GC-MS analysiert. Die Analysewerte vor und nach dem Versuch sind nachfolgend in Tabelle 1 dargestellt:

**Tabelle 1: Ergebnisse aus Laborversuch**

| Ergebnisse | | | | Tag 0 | Tag 21 |
|---|---|---|---|---|---|
| **Parameter** | **Lab.** | **Methode** | **Einheit** | **117121571** | **118000834** |
| Summe PCB7 | FR | berechnet | mg/kg TS | 2,38 | 2,22 |

Die Probenentnahme nach 21 Tagen hat eine Fortführung des Versuchs behindert. Aufgrund der großen Probenmenge musste der Versuch daher abgebrochen werden.

Die Abbaurate ist von vielen verschiedenen Faktoren abhängig. Eine Adaption von Abbauraten von Ergebnissen aus Laborversuchen verschiedener Veröffentlichungen ist in der Regel nicht möglich, da die Versuche meist bei Raumtemperatur gefahren werden. Daneben ist die Abbaurate abhängig von der Art der Chlorierung. So kann für unterschiedliche Kongenere von PCBs keine allgemeingültige Abbaurate bestimmt werden.

Veröffentlichungen von Williams und May (Environ. Sci. Technol. 1997, 31, 3491-3496) zeigten jedoch den Abbau verschiedener Kongenere von PCBs in der Oberflächenschicht von Sedimenten bei Versuchsbedingungen von 4°C.

Aufgrund beschriebener Daten kann nach 16 Wochen mit einem Abbaugrad von circa 50 Prozent, abhängig von den tatsächlichen vorherrschenden Bedingungen und Schadstoffzusammensetzungen, ausgegangen werden. Diese Annahme unterstützt die These von Quensen et al. (Science 1988, 242(4879), 752-754).

Horväthovä et al. (Chemosphere. 2018, 193, 270-277, Epub 2017) konnten in ihrer Veröffentlichung Abbauraten verschiedener PCBs von im Schnitt 70 Prozent innerhalb von 21 Tage im Labormaßstab erreichen. Hierfür wurde der Bakterienstamm *Ochrobactrum anthropi* verwendet.

### Beispiel 3: Testanordnung 2 mit Hydrogel-Beads auf Kieselsäurebasis

Um die ausgezeichnete Wirkung der erfindungsgemäßen Hydrogel-Beads beim Abbau von LHKW bis hin zum Ethen quantitativ nachzuweisen, wurde ein entsprechender Laborversuch durchgeführt. LCKW belastete Grundwasserproben wurden via head-space-vials in eine gasdichte Apparatur überführt um sicherzustellen, dass flüchtige Produkte, die während des Abbautests entstehenden, quantitativ miterfasst werden: die in den Aufschlussgefäßen befindlichen LCKW Proben wurden im Wasserbad bei konstanter Temperatur von 15 °C gehalten. Der flüchtige Anteil der LCKW wurde mittels aufgesetztem, wassergekühlten Kugelkühler niedergeschlagen und in Adsorptionsgefäßen über Aktivkohle gemäß dem AOX-Nachweisverfahren erfasst. Der Abbauversuch, der sich insgesamt über einen Zeitraum von 28 Tagen erstreckte, wurde in zwei Phasen durchgeführt: während der ersten Phase wurden anaerobe Verhältnisse mit einem Redoxpotential von mindestens minus 200 mV angelegt. In der darauffolgenden, aeroben Phase wurden die gestrippten, flüchtigen Produkte im Aktivkohlefilter gesammelt.

Die eingesetzten Hydrogel-Beads enthielten *Desulfitobacterium* mit einer Zellzahl von 5 x 10⁵ und *Magnetobacterium bavaricum* mit einer Zellzahl 2,5 x 10⁷ pro mg Kieselsäure-Hydrogel-Beads.

Die Ergebnisse beziehen sich auf die Gesamtkonzentrationen, wobei die Konzentrationen im Wasser durch die aerobe Behandlung zu Versuchsende auf < NWG abnahm und aufgrund Ihrer Flüchtigkeit im Aktivkohlefilter aufgefangen wurden. Die Analytik erfolgte nach DIN EN ISO 10301 (F4) 1997-08.

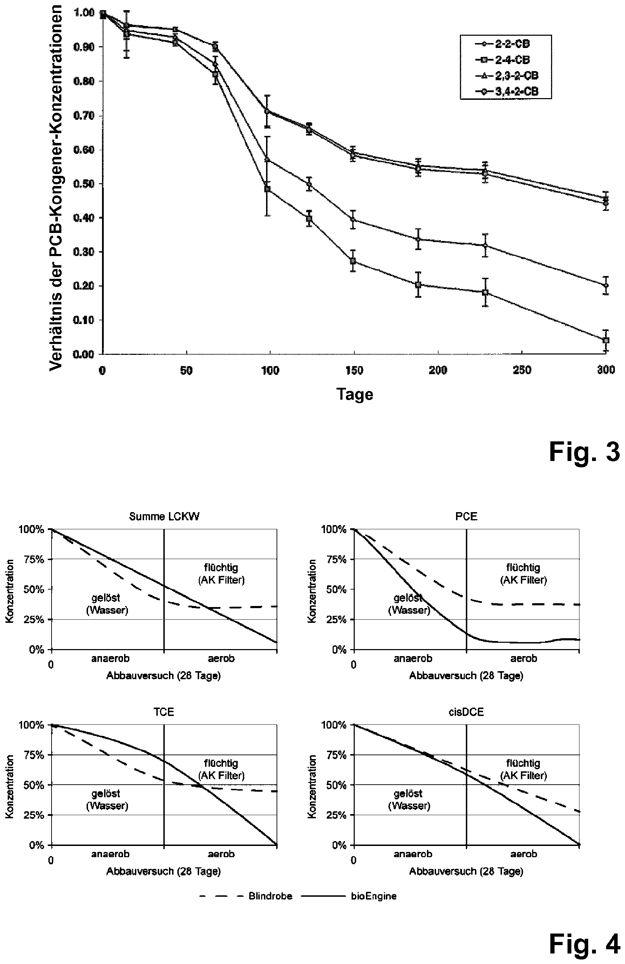

Die Ausgangskonzentrationen der Summe an LCKW lagen bei ca. 300 µg/l, bei PCE waren es im Mittel 120 µg/l, bei TCE 40 µg/l und bei CisDCE (Cis-Dichlorethen) 60 µg/l. Die Abbauraten in Prozent der Ausgangswerte waren zu Versuchsende mit Zudosierung von erfindungsgemäßen Hydrogel-Beads auf Basis von Kieselsäure (hergestellt, wie oben beschrieben) signifikant höher als in den Blindproben ohne Hydrogel-Beads auf Basis von Kieselsäure. Unter anaeroben Bedingungen kann mit Hydrogel-Beads auf Basis von Kieselsäure PCE bereits um nahezu 90% verringert werden, während in den Blindproben die Reduktion nur etwa 50% beträgt. Mit Hydrogel-Beads auf Basis von Kieselsäure sind auch im aeroben Abbau bessere Ergebnisse als in den Blindproben zu erreichen: TCE wird auf <1% der Ausgangskonzentration abgebaut, während in den Blindproben wieder nur etwa 50% eliminiert wird. Erst mit zunehmender Dechlorierung ist beim Abbau des Produktes CisDCE auch in der Blindprobe eine Verringerung von mehr als 50% erreichbar, während auch CisDCE mit Hydrogel-Beads auf Basis von Kieselsäure nach aerober Phase bis unterhalb seiner Nachweisgrenze abgebaut wird. Die Ergebnisse sind in Figur 4 zusammengefasst.

Auffällig war, dass Vinylchlorid in allen Proben während der gesamten Dauer des Abbautests unter der Nachweisgrenze war. Es war demnach kein VC in den Ausgangsproben vorhanden, auch wurde während des Abbautests keines - oder nur in Spuren - gebildet. Ein GC-MS Screening aller Proben zeigte, dass nur die dechlorierten Produkte Methanol, Hexan, Ethanol und Dimethylsulfid auftraten.

## Patentansprüche

1. **Bioremediations-Verfahren** zur Reinigung von Gewässern umfassend die folgenden Schritte:
a) Bereitstellen von mikrobiologisch dotierten Hydrogel-Beads, und
b) Ausbringen der Hydrogel-Beads in ein mit HKW belastetes Gewässer,
**dadurch gekennzeichnet, dass** die Hydrogel-Beads darin immobilisierte HKW-abbauende Mikroorganismen umfassen.

2. Verfahren nach Anspruch 1, wobei die Hydrogel-Beads ferner immobilisierte Magnetotakten umfassen, wobei die Hydrogel-Beads durch die Magnetotakten gezielt an den Ort der Kontamination dirigiert werden.

3. Verfahren nach Anspruch 1 oder 2, wobei die Gesamtzelldichte in den mikrobiologisch dotierten Hydrogel-Beads im Bereich von 10⁵ bis 10⁹ Zellen pro mg Hydrogel-Bead beträgt.

4. Verfahren nach einem der Ansprüche 1 bis 3, wobei das Hydrogel eine höhere dichte als Wasser aufweist.

5. Verfahren nach einem der Ansprüche 2 bis 4, wobei ein externes Magnetfeld an das zu behandelnde Gewässer angelegt ist.

6. Verfahren nach einem der Ansprüche 1 bis 5, wobei die HKW-abbauenden Mikroorganismen aus der Gruppe umfassend *Dehalobacter restrictus, Dehalococcoides, Desulfomonile, Desulfuromonas, Desulfitobacterium* und Mischungen davon ausgewählt sind.

7. Verfahren nach einem der Ansprüche 2 bis 6, wobei die Magnetotakten aus der Gruppe *Geobacter metallireducens, Geobacter sulfurreducens, Magnetospirillum magneticum, Magnetospirillum gryphiswaldense, Magnetospirillum magnetotacticum, Magnetococcus sp., Desulfovibrio magneticus* und *Candidatus Magnetobacterium bavaricum* und Mischungen davon ausgewählt sind.

8. Verfahren nach einem der Ansprüche 1 bis 7, wobei das Hydrogel durch einen organischen Gelbildner ausgewählt aus der Gruppe bestehend aus Alginat, Carrageenan, Chitosan, Gelatine, Kollagen und Mischungen davon gebildet ist.

9. **Mikrobiologisch dotierte Hydrogel-Beads** zur Verwendung in einem Bioremediations-Verfahren nach einem der Ansprüche 1 bis 8, wobei die Hydrogel-Beads zumindest immobilisierte HKW-abbauende Mikroorganismen und Magnetotakten umfassen.

10. **Verwendung** von Hydrogel-Beads nach einem der vorgenannten Ansprüche.
